# EUROPEAN PATENT APPLICATION

(11) **EP 2 929 783 A1**
(43) Date of publication of application: **14.10.2015**
(21) Application number: 14164385.8
(22) Date of filing: 11.04.2014
(51) Int. Cl.: A21D 2/36, A23L 1/10, A23L 1/308

(54) **Food flours useful in the reduction of glycemia, in the treatment of metabolic syndrome, in the reduction of cholesterol and/or in the treatment of type 2 diabetes**

(71) Applicant: New Life Hold S.r.L., 26841 Casalpusterlengo Lodi (IT)
(72) Inventor: Varvello, Franco, 27029 VIGEVANO (PV) (IT); Varvello, Francesca, 29121 PIACENZA (PC) (IT)
(74) Representative: Finetti, Claudia

(57) **Abstract**

The present invention relates to a food flour or mixture of food flours, wherein the flours are selected from wheat flour, rye flour, buckwheat flour, rice flour, barley flour, oatmeal, corn flour or combinations thereof, preferably wheat flour, more preferably soft wheat flour, characterized in that it comprises a quantity of soluble fibre rich in immediately available soluble pentosans, among which arabinoxylans, ranging from 3 g to 4.5 g with respect to 100 g of flour or mixture of flours, preferably wheat flour, and in that a quantity ranging from 0.09 g to 0.25 g of the total weight of the soluble fibre has a molecular size of the polysaccharide chains lower than 5 kDa.

The soluble fibre is preferably present in the mixture of the invention in a quantity ranging from 3.2 g to 3.5 g with respect to 100 g of flour or mixture of flours of the invention, preferably wheat flour, and/or the percentage of soluble fibre having a molecular size of the polysaccharide chains lower than 5 kDa ranges from 0.09 g to 0.19 g of the total weight of the soluble fibre.

Even more preferably, the quantity of immediately available soluble pentosans, among which arabinoxylans, present in the flour or mixture of food flours of the invention, preferably wheat flour, ranges from 0.43 g to 0.58 g with respect to 100 g of flour or mixture of flours of the invention, preferably wheat flour.

The flour or mixture of flours of the invention, preferably wheat flour, as defined above, are useful in the reduction of postprandial glycemia in normoglycemic subjects, in the treatment of metabolic syndrome, in the reduction of cholesterol or in the treatment of type 2 diabetes.

## Description

The present invention relates to a food flour or a mixture of food flours, wherein the flours are selected from wheat flour, rye flour, buckwheat flour, rice flour, barley flour, oatmeal, corn flour or combinations thereof, preferably wheat flour, more preferably soft wheat flour, characterized in that it comprises a quantity of soluble fibre rich in immediately available soluble pentosans, among which arabinoxylans, ranging from 3 g to 4.5 g with respect to 100 g of flour or mixture of flours, preferably wheat flour, and in that a quantity ranging from 0.09 g to 0.25 g of the soluble fibre has a molecular size of the polysaccharide chains lower than 5 kDa.

The wheat flours, which are preferably of soft wheat, can be 0 and 00 flours (ash content <0.65%). Hard wheat semolina, reground and not, is also used (ashes <0.90%).

The soluble fibre is preferably present in the mixture of the invention in a quantity ranging from 3.2 to 3.5 g with respect to 100 g of the flour or mixture of flours of the invention, preferably wheat flour, and/or the quantity of soluble fibre having a molecular size of the polysaccharide chains lower than 5 kDa ranges from 0.09 g to 0.19 g of the soluble fibre.

The flour or mixture of flours of the invention, preferably wheat flour, as defined above, can be used in the reduction of postprandial glycemia in normoglycemic subjects, in the treatment of metabolic syndrome, in the reduction of cholesterol and in the treatment of type 2 diabetes.

The current well-established awareness of the importance of nutrition for human health, has drawn the attention of experts in the food sector towards food that has a positive influence on various physiological aspects of interest and on the well-being of human beings or animals in general. In particular, in recent years, operators in the field have become interested in so-called functional foods, i.e. foods for which physiological benefits and also adequate nutritional effects have been demonstrated, in addition to their usefulness in reducing the risk of illness, above all in the metabolic area.

In the field of flours, the development of industrial mills to the detriment of artisan mills has led to the diffusion of a more refined flour, i.e. without the outer integuments of the wheat caryopsis.

The caryopsis, commonly known as grain, of wheat does in fact have a complex structure composed of various parts:
- outer integuments (pericarp, spermoderm, nucellar layer and aleurone layer), which all contribute to forming the bran which represents about 14% of the total weight of the caryopsis;
- endosperm (starch and proteins) or "mandorla amilifera": this part represents about 83% of the total weight of the caryopsis;
- embryo with scutellum or germ: this part represents about 3% of the total weight of the caryopsis.

At present, modern grinding technologies eliminate the outer integuments and germ of the grain, which therefore form the grinding by-products. The most widely-used wheat flour (of the type 00 and 0) is in fact exclusively composed of the grinding products obtained from the endosperm ("mandorla amilifera").

Eliminating the part of the outer integuments to obtain refined flour therefore represents a significant change in the eating habits of people who are nourished by this refined flours, which can have repercussions on their health.

Nutritional science in fact recommends substituting the white bread obtained with refined flours, which is a symbol of wealth, with rustic bread prepared with whole flours.

The positive effect that bran and wholegrain cereals intake has on intestinal regularity and in preventing some diseases, has been known for some time. Only recently, however, have various studies shown that these benefits cannot be exclusively attributed to the "drag and cleaning" effect that fibre-rich vegetables have, but also and above all to well-defined molecules which form these vegetal matrixes.

A food fibre consists of insoluble fibre, i.e. cellulose and lignin, which prevalently acts on the functioning of the gastrointestinal tract, favouring the "drag and cleaning" effect indicated above, as it favours the passage of food bolus in the intestine and evacuation of the feces.

A food fibre also consists, however, of soluble fibre, primarily consisting of polysaccharide chains of arabinoxylans belonging to the family of pentosans and ferulic acid, an antioxidant molecule associated with the pentosan structures of wheat bran.

The soluble fibre regulates the absorption of sugars and fats contributing to the control of the glucose and cholesterol level in the blood. The vast majority of pentosans, among which arabinoxylans, and ferulic acid present in wheat bran and in food fibre in general, is not bioavailable however, as it is strictly connected to other inert structures such as cellulose and lignin. It is this inability of the digestive system to break down these structures that has induced the pro-biotic intestinal microflora of the large intestine to produce hydrolytic enzymes which, in the presence of food fibre, separate pentosans and ferulic acid from the compounds to which they are bound, making them bioavailable. This process, however, is slow and, as it takes place only in the final part of the intestine, it has very low yields.

An *in vivo* study (Sandra M. Kern, Richard N. Bennett, Fred A. Mellon, Paul Anthony Kroon and Maria - Teresa Garcia-Conesa J., "Adsorption of Hydroxycinnamates in Humans after High-Bran Cereal Consumption" Agric. Food Chem. 2003, 51, 6050-6055), has shown that only 3% of the ferulic acid normally ingested with a breakfast of wheat having a high fibre content, is rapidly absorbed.

In this respect, credited scientific opinion agrees that the pentosans and in particular arabinoxylans obtained from the endosperm of wheat, have an active role in reducing the postprandial glycemic response in normoglycemic subjects. In particular, these effects are observed with a consumption of 8 g of fibre rich in arabinoxylans deriving from the endosperm of wheat (at least 60% by weight of arabinoxylan) per 100 g of carbohydrates (EFSA Journal 2011; 9(6):2205).

Although these positive effects have been confirmed, it should be noted that the ingestion of a quantity of 8 g of fibre rich in arabinoxylans per 100 g of carbohydrates can lead to a series of disturbances such as swelling, bloating, irritation of the colon and consequent abdominal pain, due to the part of insoluble fibre contained in wheat bran.

Furthermore, the whole food that must be consumed for reaching a content of fibre rich in arabinoxylans equal to 8 g with respect to 100 g, is generally less appetizing and contains so-called phytates which cannot be digested by human beings or non-ruminant animals, and which are generally considered anti-nutritive due to the chelating effect of other nutritive elements, preventing its absorption.

A further consideration to be made is that the insoluble part of wheat bran can be contaminated by mycotoxins which alter the immune and neurological system, cause oxidative stress and also damage to the intestinal barrier.

The inventors of the present invention have now found a food flour or mixture of food flours selected from wheat flour, rye flour, buckwheat flour, rice flour, barley flour, oatmeal, corn flour or combinations thereof, preferably wheat flour, more preferably soft wheat, characterized in that it comprises a quantity of soluble fibre rich in soluble pentosans among which arabinoxylans, ranging from 3 g to 4.5 g with respect to 100 g of flour or mixture of flours, preferably wheat flour, and in that a quantity ranging from 0.09 g to 0.25 g of said soluble fibre has a molecular size of the polysaccharide chains lower than 5 kDa.

The soluble fibre is preferably present in the flour or mixture of flours of the invention, preferably wheat flour, in a quantity ranging from 3.2 to 3.5 g with respect to 100 g of flour or mixture of flours of wheat, rye, buckwheat, rice, barley, oats and corn, preferably wheat, more preferably soft wheat, and the quantity of soluble fibre having a molecular size of the polysaccharide chains lower than 5 kDa ranges from 0.09 g to 0.19 g.

Even more preferably, the quantity of immediately available soluble pentosans, among which arabinoxylans, present in the mixture of food flours of the invention, ranges from 0.43 g to 0.58 g per 100 g of flour or mixture of flours of wheat, rye, buckwheat, rice, barley, oats and corn, preferably wheat flour.

Traditional whole flour (ash content ranging from 1.3% to 1.7%) can supply up to 8 g of fibre of which 60% (4.8 g) can consist of pentosans, the bioavailable soluble pentosans, however, i.e. which can be used by the human organism, in conventional traditional whole flour, are only in a quantity of 0.35 g - 0.41 g. The soluble pentosans immediately bioavailable present in the flour or mixture of flours of the invention, are 0.43 g - 0.58 g, therefore bioavailable to a greater extent with respect to traditional whole flour by 4.9% to 65.7% (DELTA: 0.02 g - 0.23 g), preferably higher than 35.3%. The presence of soluble pentosans does not in itself guarantee effectiveness, as the pentosans are only active, for example in the reduction action of glycemia, if they are bioavailable, consequently if they are "separated" from the insoluble fraction of the fibre. In soft wheat flour 00, the content of bioavailable pentosans is 0.15 g - 0.25 g. In the flour or mixture of flours of the invention, the immediately bioavailable soluble pentosans present are 0.43 g - 0.58 g, therefore bioavailable to a higher extent with respect to traditional whole flour by 72% to 287% (DELTA: 0.18 g - 0.43 g), consequently preferably higher than 179.5%. The flour or mixtures of flours of the invention therefore represent a source of soluble fibre substantially free of lignin and cellulose and consequently they do not cause irritation phenomena of the colon with consequent bloating and abdominal pain and are characterized by the absence of the characteristic bitter taste typical of whole flours.

Furthermore, the flour or mixtures of flours of the invention contain ferulic acid in a quantity higher than 10% with respect to the quantity present in whole flours. As said ferulic acid is present in a form separated from the structures of the wheat bran, the same is present in a more highly bioavailable form in the flour or mixtures of flours of the invention.

The content of bioavailable ferulic acid in the flours mixtures of the invention ranges from 0.200 mg to 0.250 mg and is preferably 0.236 mg with respect to 100 g, i.e. 10.3% higher with respect to traditional whole flour which contains 0.214 mg with respect to 100 g.

The flour or mixtures of flours, preferably wheat flour, of the invention as defined above, allow beneficial effects to be obtained on the postprandial glycemic response in normoglycemic subjects, as it lowers said postprandial glycemia by the ingestion of a much lower quantity of soluble fibre with respect to what is so far known in the art, thus overcoming drawbacks connected with the ingestion of a high quantity of food fibre. A positive influence of the flours mixture of the invention has also been found on the treatment of metabolic syndrome, in the reduction of cholesterol and in the treatment of type 2 diabetes.

Once ingested, the soluble fibre characterized by a molecular size lower than 5 kDa is bioavailable to a greater extent with respect to that commonly found in conventional wheat bran and flours and this provides the possibility of reducing the quantity of soluble fibre which must be consumed for obtaining the reduction effect of postprandial glycemia in normoglycemic subjects, in the treatment of metabolic syndrome, in the reduction of cholesterol and in the treatment of type 2 diabetes.

A further aspect of the present invention therefore relates to a flour or mixture of flours of wheat, rye, buckwheat, rice, barley, oats and corn, preferably wheat, more preferably soft wheat, as defined above for use in reducing postprandial glycemia in normoglycemic subjects, in the treatment of metabolic syndrome, in the reduction of cholesterol and in the treatment of type 2 diabetes.

The flour or mixture of flours of the present invention, can be obtained with the following general method described in WO2009/016482, which is described hereunder with particular reference to a wheat flour.

Wheat bran is obtained from the wheat grinding process, by means of sifting or sieving. The bran thus separated is mixed with tap water, preferably in a ratio within the range of 1:1-1:3, and a pasteurization process is initiated, preferably at a temperature ranging from 60° C to 100° C for 15-30 minutes. This operation serves for both reducing the bacterial contamination present in the bran which could interfere with the hydrolysis process and also for broadening the fibrous meshes in order to favour the subsequent enzymatic attack.

The enzymatic complexes, preferably hydrolytic enzymes of a fungal origin, are then added to the mixture. These enzymes are optimally active in the hydrolysis action at a controlled temperature ranging from 40°C to 55°C and/or at a pH of 3.8, preferably for a time of 50-60 minutes in repeated cycles for 12-48 h, preferably 12-24 h. The above enzymatic complexes are necessary for obtaining the soluble bioliquified bran.

A separation phase is subsequently effected, preferably by means of filtration, in order to eliminate the lignin fraction (discarded) from the soluble fraction (soluble bioliquified product of interest). The soluble bioliquified product is then pasteurized in order to stabilize it before kneading with a low-power 0 type flour obtained from Italian and European wheat, added in a ratio of 1:1 with respect to the bioliquified liquid product, whose function is simply to support the bioliquified liquid product, which comes into close contact with the flour, during the kneading phase.

The dough obtained is then fractionated ("broken") to form regular loaves in weight and dimension. These loaves are deep-frozen, preferably at a temperature of -20° C, and subjected to a dehydration process, by means of lyophilization or drying, to eliminate the water, obtaining "solid anhydrous flakes" of soluble bioliquified bran. A bioliquified wheat bran in powder form is obtained by grinding these flakes.

Said bioliquified product in powder form is dosed in a conventional flour of wheat, rye, buckwheat, rice, barley, oats and corn, preferably wheat, more preferably soft wheat, and subsequently mixed to obtain the flour or mixture of food flours of the invention described above.

According to a further preferred aspect, said conventional flour is obtained from the grinding process of wheat flour or a mixture of wheat flours, said flours being soft wheat flours 0 and/or 00 to which the extract is added

Said flours or mixture of flours of wheat, rye, buckwheat, rice, barley, oats and corn, preferably wheat, more preferably soft wheat, is obtained from seeds subjected to grinding processes and subsequent sifting in order to separate almost all of the outer integument and insoluble fibre contained therein, from the "mandorla amilifera", so that the residual content of fibre insoluble in flour, determined with standard methods (for example, those described in AOAC 991.43 - 1994) is less than 0.3% and so as to reach a quantity of ashes lower than 0.70% for soft wheat flours, and a quantity lower than 0.95% for buckwheat, rice, barley, oat and rye flours. The function of grinding to which the caryopses are subjected, is to completely separate the bran part so that it is totally available for the enzymatic hydrolysis process, in order to allow the whole part of pentosans contained therein to be extrapolated from the bran and made totally bioavailable as it is separated.

The enzymatic hydrolysis techniques allow the molecular structures having a biological activity, i.e. phenols such as ferulic acid and arabinoxylans, to be preserved.

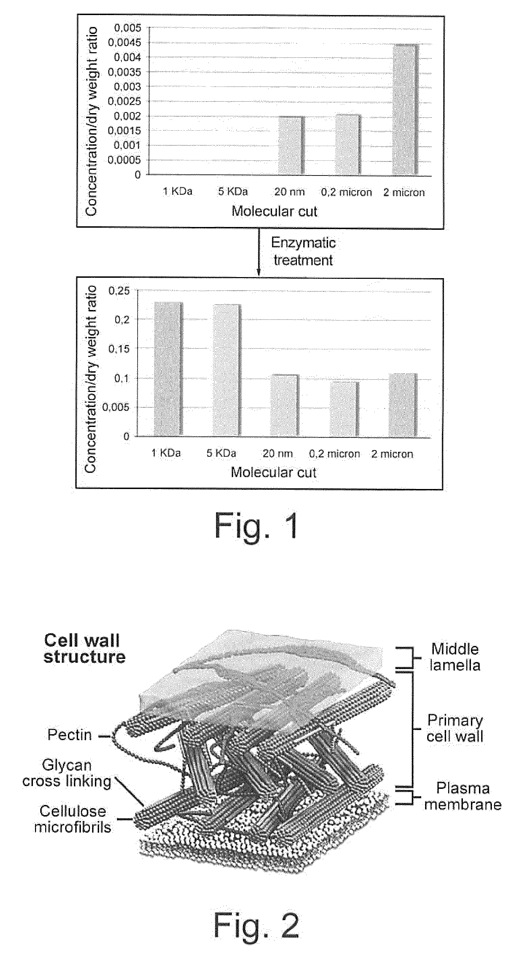

An evaluation of the molecular cuts obtained after enzymatic treatment has shown how the use of this particular enzymatic technique allows not only the "active" soluble molecules to be separated from the inactive insoluble matrix, but also the molecular dimensions of these active molecules to be reduced to molecular dimensions which can be easily usable and accessible within the organism. The digestion of a molecular complex having dimensions in the order of magnitude of a few microns is in fact slower and more difficult with respect to the digestion of molecules having dimensions in the order of magnitude of a few kilodaltons (KDa). Consequently, the technique used allows an extract of active fibre to be obtained in a molecular form which is more bioavailable with respect to the common fibre extracts present on the market. In this respect, reference should be made to the results indicated in Figure 1, which shows the molecular size of the polysaccharide chains present in the flours before and after the enzymatic treatment.

The bran treated with the method described above provides all the pentosans present therein in a form not bound to the inert insoluble matrix consisting of cellulose and lignin, at the same time obtaining "useful" molecules in a reduced form from a dimensional point of view, as indicated in Figure 2.

The quantity of bioavailable soluble pentosans in the mixtures of flours of the invention, i.e. in flours enriched with the soluble bran extract (soluble bioliquified product) is higher than traditional whole flour by 4.9% to 65.7% (DELTA: 0.02 g - 0.23 g), therefore preferably to an extent higher than 35.3%. This latter result relating to conventional whole flour is linked to the fact that although the pentosans are present in this flour in significant concentrations, they are present in a scarcely bioavailable form.

The bioliquified bran obtained through this technology is surprisingly effective.

According to a particularly preferred aspect of the invention, in fact, with the addition of 0.5 g of this extract of soluble fibre (bioliquified), to conventional flour, a total quantity of soluble fibre of 3.0 - 4.5 g is obtained, determined with standard methods (for example those described in AOAC 991.43 1994) thus allowing an additional supply of pentosans of 0.18 g - 0.43 g, of which 0.09 g - 0.25 g having molecular dimensions of the polysaccharide chains lower than 5 kDa of soluble pentosans.

### Brief description of the figures

The present invention is described for illustrative but non-limiting purposes according to its preferred embodiments also with the help of the enclosed figures, wherein:
- figure 1 shows how the molecular size distribution of the polysaccharide chains of the soluble fibre changes after treatment with the enzymatic complex of the process used in the present invention. In the first figure, it can be seen how the molecular dimensions of the polysaccharide chains, before treatment with the process used, were higher than 5 kDa, whereas after treatment, the molecular dimensions of the polysaccharide chains drop to values lower than 5 kDa, thus guaranteeing the bioavailability of the pentosans contained in the soluble fibre;
- figure 2 shows the structure of the bran;
- figure 3 shows the response of the plasma glucose after the ingestion of bread produced with a mixture of flours according to the invention and after the ingestion of bread produced with conventional flour of the 00 type.

The present invention is described for illustrative but non-limiting purposes according to its preferred embodiments, but variations and/or modifications can obviously be applied by experts in the field, without being excluded from the relative protection scope, as defined by the enclosed claims.

### EXAMPLES

The following study was effected in order to evaluate the beneficial effects of the soluble fibre on the metabolism of carbohydrates.

In particular, the objective was to compare the effect of a mixture of flours according to the invention on postprandial glycemia in normoglycemic subjects with respect to flour of the 00 type. The palatability of the product was also evaluated in subjects not accustomed to consuming products with a high fibre content.

### Materials and Methods

In the present study, 24 normoglycemic subjects were examined (18 women and 6 men; average age 34.3 years), normal weight (BMI body mass index = 22.9 ± 2.10) and normoglycemic (84.92 ± 10.9 mg/dL). The weight, height, BMI, waist circumference of all the patients were measured and a brief personal and family history was effected and finally an evaluation of the lean mass and fat mass with the use of an impedance meter.

The subjects were then randomly divided into two groups (group 1 and group 2). A roll of 100 g containing 00 flour was given to the subjects of group 1, who had been fasting for at least 4 hours, whereas a 100 g roll was given to the subjects of group 2, who had also been fasting for at least 4 hours, containing a mixture of flours obtained from seeds subjected to grinding and subsequent sifting processes, in order to separate almost all the outer integuments and insoluble fibre contained therein from the endosperm ("mandorla amilifera"), so that the residual insoluble fibre content in flour determined with standard methods (for example, those described in AOAC 991.43 - 1994) is lower than 0.3% and so as to reach a quantity of ashes lower than 0.70%, to which bioliquified bran at 0.5% was added. The experiment was carried out blindfolded so that the subjects did not know the type of bread they would consume. An evaluation of the glycemic values was effected for each subject with the use of a glucometer before eating the bread and 30 minutes after it had been ingested. The ingestion of the roll was accompanied by a modest amount of water (200-300 ml). After collecting the data, a questionnaire was completed in order to evaluate the palatability of the product and satiating capacity.

After a week, bread was again administered, applying however a "cross-over", i.e. bread containing the mixture of flours of the invention was administered to the subjects who had ingested bread containing flour 00 in the first test, and viceversa. Experiments of this kind try to minimize the variability linked to the single subject (in practice, thanks to the cross-over, each patient has control of himself).

The results were expressed as average ± e.s. (standard error). A comparison of the data was effected by the application of the Student Test. A value of p<0.05 was considered statistically significant. The analysis was carried out with Software MEDCALC Ver. 13.

### Results

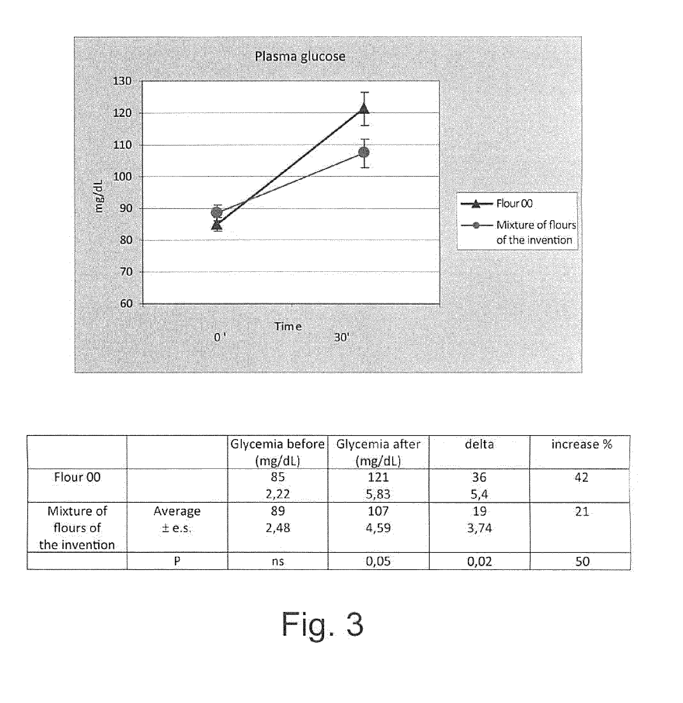

Figure 3 indicates the plasma glucose response after the ingestion of bread containing the mixture of flours of the invention and after the ingestion of bread containing conventional 00 flour, respectively. The plasma glucose concentrations on an empty stomach did not differ in the two groups before the ingestion of bread. It was observed that 30 minutes after ingesting the bread, the plasma glucose concentrations increased with respect to the baseline values. The postprandial peaks of the glucose concentrations in the subjects that had consumed bread produced with the mixture of flours of the invention were much lower with respect to the values obtained with the control (P <0.05). In terms of palatability, almost all of the subjects proved to like the formulation of the bread without noting any difference between the two types of preparations.

It should be noted that the cooking of the soluble fibre during the production of bread does not alter the properties of the soluble fibre itself.

### Conclusions

The ingestion of bread obtained from flours with a quantity of 3.2 g of soluble fibres with a high content of pentosans and arabinoxylans significantly reduced the postprandial glycemia in the subjects during the study.

## Claims

1. A food flour or mixture of food flours selected from wheat flour, rye flour, buckwheat flour, rice flour, barley flour, oatmeal, corn flour or combinations thereof, preferably wheat flour, more preferably soft wheat flour, **characterized in that** it comprises a quantity of soluble fibre rich in soluble pentosans, among which arabinoxylans, ranging from 3 g to 4.5 g with respect to 100 g of flour or mixture of flours, and **in that** a quantity ranging from 0.09 g to 0.25 g of the soluble fibre has a molecular size of the polysaccharide chains lower than 5 kDa.

2. The food flour or mixture of food flours according to claim 1, wherein the soluble fibre is present in the mixture of the invention in a quantity ranging from 3.2 g to 3.5 g with respect to 100 g of flour or mixture of flours.

3. The food flour or mixture of food flours according to any of the previous claims, wherein the percentage of soluble fibre having a molecular size of the polysaccharide chains lower than 5 kDa ranges from 0.09 g to 0.19 g of the total weight of the soluble fibre.

4. The food flour or mixture of food flours according to any of the previous claims, wherein the quantity of soluble pentosans, among which arabinoxylans, present in the mixtures of food flours of the invention ranges from 0.43 g to 0.58 g with respect to 100 g of the mixture of flours.

5. The food flour or mixture of food flours according to any of the previous claims, wherein the quantity of bioavailable ferulic acid ranges from 0.200 mg to 0.250 mg and is preferably 0.236 mg with respect to 100 g.

6. A food flour or mixture of food flours as defined in claims 1-5, for use in the reduction of postprandial glycemia in normoglycemic subjects.

7. A food flour or mixture of food flours as defined in claims 1-5, for use in the treatment of metabolic syndrome.

8. A food flour or mixture of food flours as defined in claims 1-5, for use in the reduction of cholesterol.

9. A food flour or mixture of food flours as defined in claims 1-5, for use in the treatment of type 2 diabetes.
